# EUROPEAN PATENT APPLICATION

(11) **EP 1 702 581 A1**
(43) Date of publication of application: **20.09.2006**
(21) Application number: 05290590.8
(22) Date of filing: 17.03.2005
(51) Int. Cl.: A61C 8/00

(54) **Dental implants integrated into the bone to sustain a dental prosthesis**

(71) Applicant: Juan Jose Gersberg, 78400 Chatou (FR)
(72) Inventor: Juan Jose Gersberg, 78400 Chatou (FR)

(57) **Abstract**

An implant system comprising a body that defines a highly sharp conical end portion provided with a longitudinal milled section that continues as a cylindrical central portion, both portions having a trapezoidal-sectional thread and ending at the top in a truncated conical head that has a truncated conical cavity from whose bottom a threaded blind hole projects, the inner wall of the truncated conical cavity being thus provided with a plurality of projections lying in divergent planes that match its large diameter matching the coronal end and its small diameter matching the apical end, said projections having a triangular cross-section whose free edges are parallel to the annular surface of the cavity and have a rounded profile, said projections forming a star-shaped figure, and a prosthetic support structure being obtained in said cavity, having a truncated conical portion whose side wall has cross-sectional projections homologous to the projections of said cavity, said projections delimiting rounded-bottom cuttings, which form, with the projections of the cavity, a joint between both pieces, a longitudinally drilled truncated conical portion projecting from the prosthetic structure.

## Description

This application claims the benefit of Argentine Application No. 20040100551, filed on February 20, 2004, which is hereby incorporated by reference.

### BACKGROUND OF THE INVENTION

### Field of the Invention

The present invention relates to a dental implant system and, in particular, to a combination comprising an implant to be anchored in the jawbone of a patient and a prosthetic support structure.

### Description of the Related Art

It is well known that there are problems in dental implant systems when the prosthetic support must be affixed, since the impact caused by masticatory forces sometimes causes micromovements that are detrimental to the prosthetic support/dental implant combination.

There are different types of systems that try to solve said problems; they comprise an implant securable in the jawbone, a prosthetic support and a fastening screw for securing the prosthetic support to the implant. The implant consists of a cylindrical body with an externally threaded portion. At the top, the implant has a truncated conical cavity with a striated portion for receiving the prosthetic support structure. The prosthetic support structure also has a striated end portion that is connected to the striated portion of the conical cavity for securing the prosthetic support structure to the implant. Above the striated portion, the support structure has a gingival portion that extends through the patient's gum, described in U.S. Patent No. 5,195,892.

### BRIEF SUMMARY OF THE INVENTION

The primary object of the present invention is a dental implant system combining a body of a variable diameter -from 1.8 mm to 6.0 mm- and a variable length -from 8.0 mm to 18.0 mm-. Above the coronal end of the implant, a conical structure for supporting the prosthetic crowns is placed. The conical body is affixed through a striated body in the coronal end of the implant, which presents an ad-hoc cavity.

Another object of the invention is an implant system that, because of its special design, produces a substantial increase in the surface contact area between the fastening striated cones of the prosthetic support structure and the implant striated cone of the ad-hoc cavity, of the implant, benefiting the fixation of the components.

Another object of the invention is an implant to be anchored in the jawbone having an apical portion that ends gradually narrowing, the latter showing a longitudinal milled section and threads that allow easy penetration and self-advancing into the jawbones.

Yet another object of the invention is a system for obtaining the star-shaped cross-sectional striated conical combination, reducing micromovements to a minimum preventing disconnection, loosening and/or wear caused by the impact of masticatory forces through the prosthetic components anchored into the implant.

Finally, another object of the invention is a system for tensions in the fastening screw preventing it from loosening and/or breaking since the star-shaped, conical combination generates a fixation of the components which benefits the success of the system as well as a perfect fitting between both parts. Its star-shaped portion allows it to be screwed until it is properly positioned and to be placed parallel to a group of implants (for better positioning of the crowns included in a prosthesis), which contributes to obtain perfect peripheral seal that increases airtightness, thus guarding bacterial invasion.

The primary feature of the implant consists in its shape and its thread, which allow self-advancing with minimal bone preparation.

In smaller-diameter models, a small guide hole is used, drilled with a locator drill.

In larger-diameter models, and depending on bone quality, it will be possible to screw in the same way or to drill a hole of a smaller diameter than the implant body, so as to allow self-advancing of the thread -which is variable in width- in yet untouched bone.

This system guarantees initial implant immobility since it prevents micromovements, an essential step to guarantee adequate bone neoformation.

It has been shown and documented that initial immobility is a major factor in the fixation of an implant.

The present invention proposes a dental implant system that allows the joint between the dental implant and the prosthetic support structure to be fixedly secured, especially in cases where single teeth must be used.

The system proposed comprises a dental implant including a body presenting a conical end portion that extends as a cylindrical central portion, both portions provided with a highly wide thread, said conical portion having a milled section that extends from the intersection between the conical portion and the cylindrical portion to the apical end, said cylindrical portion extending as a truncated conical portion having a truncated conical cavity, from whose bottom a threaded blind hole projects, the inner wall of the conical cavity being thus provided with a plurality of projections lying in divergent planes that match its large diameter, said projections showing a triangular cross-section whose free edges are parallel to the annular surface of the cavity, and they have a rounded profile, said projections forming, if cross-sectioned, a star-shaped figure, a prosthetic support structure being thus disposed in the cavity, the structure consisting of a truncated conical portion whose side wall also has triangular cross-sectional projections and rounded-profile free edges parallel to said wall, fitting -in a fixed position- the rounded-bottom profile slots delimited by the projections of said dental-implant cavity, another truncated conical portion vertically drilled -in whose bottom there is a milled section of a smaller diameter longitudinally aligned- projecting from said truncated conical portion through a circular-crown-shaped stepped surface.

### BRIEF DESCRIPTION OF THE SEVERAL VIEWS OF THE DRAWINGS

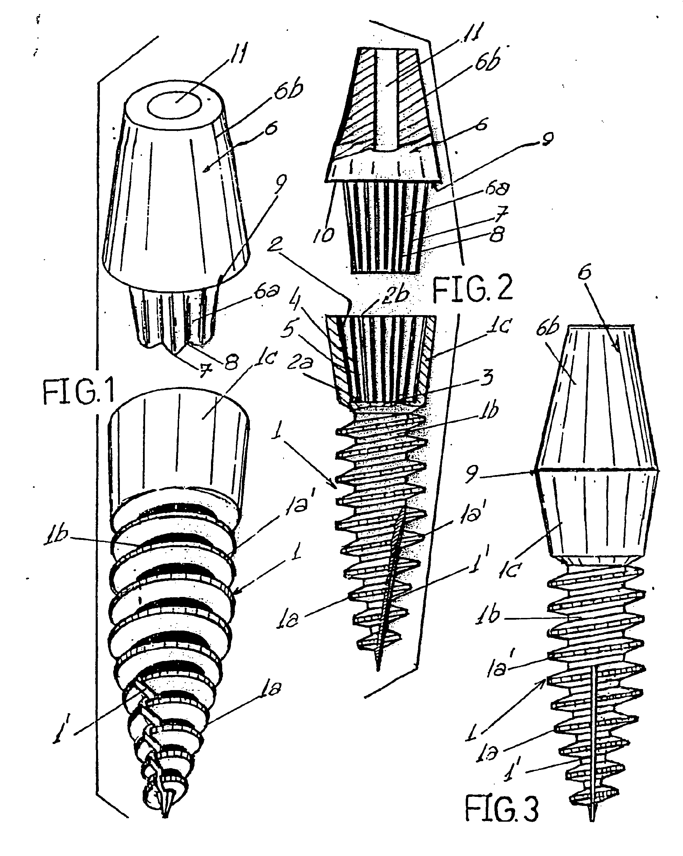

FIG. 1 shows an exploded perspective view of a first embodiment of the implant that defines the arrangement of the present invention;
FIG. 2 shows an exploded partial sectional side elevational view of the implant represented in FIG. 1;
FIG. 3 shows a side elevational view in fitting position of both pieces of the implant illustrated in FIG. 1;

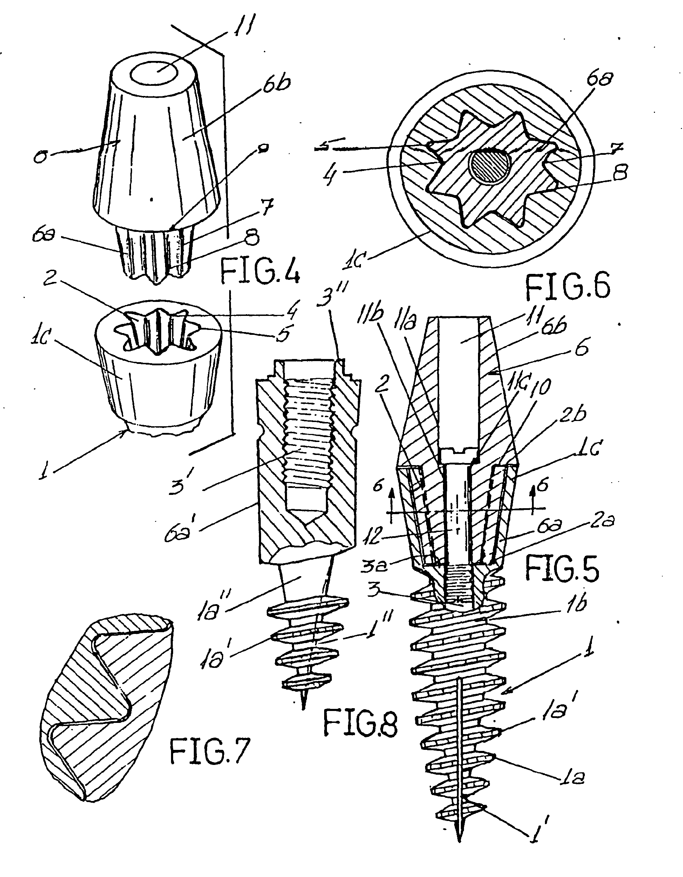

FIG. 4 shows a perspective view in a separate position of the hollow portions provided with grooves and ribs that compose each piece of the implant;
FIG. 5 shows a partial sectional side elevational view of both pieces of the implant;
FIG. 6 shows a sectional view taken on line 6-6 of the implant in FIG. 5;
FIG. 7 shows an enlarged sectional detail of the grooves and slots that define the star-shaped cross-section;
FIG. 8 shows a partial sectional side elevational view of a second embodiment of the present invention;
FIG. 9 shows a side elevational view of a third embodiment of the present invention;
FIG. 10 shows a side elevational view of a fourth embodiment of the present invention; and
FIG. 11 shows a partial sectional side elevational view of a fifth embodiment of the present invention.

### DETAILED DESCRIPTION OF THE INVENTION

According to what the figures in the drawings show, the implant system that is object of the present invention in a first embodiment comprises a body 1 having a threaded conical end portion 1a, provided at the lower end with a longitudinal milled section 1', to extending as an externally threaded cylindrical central portion 1b, ending in an inverted truncated conical portion 1c that defines the implant head. Both threaded portions have a trapezoidal cross-sectional thread 1 a'.

The head portion 1c of the body 1 is provided with a truncated conical cavity 2 having the same conicity as said head 1c, from whose bottom 2a a threaded blind hole 3 projects and defines in the small base of said cavity 2 a circular-crown-shaped surface 3a, the side wall of the cavity 2 having a plurality of triangular cross-sectional ribs 4 that define triangular cross-sectional slots 5, to define in said cavity 2 a star-shaped contour with rounded edges, said ribs 4 and slots 5 extending from the large base 2b of the cavity 2, at its coronal part, to the small base 2a, at the apical part.

The prosthetic support structure comprises a body 6 having a truncated conical portion 6a, laterally provided with ribs 7 and slots 8, having alternately disposed rounded edges and whose cross-section corresponds with the cross-section of each rib and slot 4 and 5 of the cavity 2, a truncated conical portion 6b conically opposite to the portion 6a projecting from the small base 9 of the truncated conical portion 6a through a stepped surface 10.

The body 6 forming the prosthetic support has a through hole 11 having two stepped portions 11a and 11b that define annular shoulders 11c supporting a screw 12, which is a fastening member between the prosthetic support and the implant.

Said star-shaped portion has the vertexes to match the implant-and-prosthetic-support portion rounded, which allows a higher resistance in the annular wall.

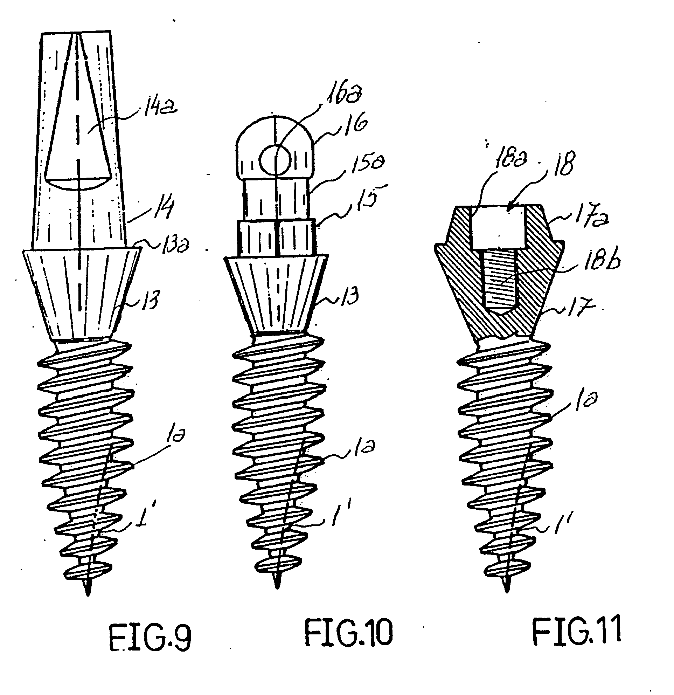

In a second embodiment represented in FIG. 8, the implant comprises a conical portion 1a" provided with a milled section 1" surrounded by a thread 1a' extending as a larger-diameter cylindrical portion 6a', provided with a laterally threaded blind hole 3', its opening being surrounded by a hexagonal projection 3".

In a third embodiment represented in FIG. 9, the implant comprises an externally threaded conical end portion 1 a, provided with a longitudinal milled section 1' extending as an inverted truncated conical portion 13 from whose large base a cross-sectional cylindrical portion 14 extends, narrowing toward its free end, said portion defining with the free edge of the large base of the truncated conical portion 13 a circular-crown-shaped surface 13a, said cylindrical portion 14 having a chamfer 14a.

In a fourth embodiment represented in FIG. 10, said threaded conical portion 1a has another truncated conical portion 13, from whose large base, through annular shoulders, a square prismatic portion 15 further extends as a cylindrical neck portion 15a that ends in a spherical-cap-shaped top head 16, annularly having at least one sphere 16a, disposed as a cap.

In a fifth embodiment represented in FIG. 11, said threaded conical portion 1a projects in an inverted truncated conical portion 17, from whose large base a stepped conical portion 17a projects, said portion having a blind hole 18 conformed by an end portion 18a and a threaded bottom portion 18b.

## Claims

1. A bone-integrated dental implant system for supporting a dental prosthesis, **CHARACTERIZED in that** it comprises a body having a conical end portion provided with a longitudinal milled section and a cylindrical central portion, said portions being surrounded by a thread extending upwardly as a shorter-length truncated conical portion, wherein a truncated conical cavity is obtained, having a substantially similar conicity to that of the side wall of said portion, from whose bottom a laterally threaded blind hole extends, having a shorter diameter than that of the small base of the cavity, the side wall of said cavity having a plurality of triangular cross-sectional ribs that define triangular cross-sectional slots and whose free edges lie in parallel planes, allowing the fitting of another truncated conical portion having the same conicity provided with ribs and slots having their angle and section homologous to the ones previously mentioned, said portion extending as an opposite-conicity truncated conical portion whose large base defines annular shoulders, said body being longitudinally drilled by two portions having different diameter, as a screw means for connection to the implant.

2. An implant system as set forth in claim 1, **CHARACTERIZED in that** the engageable truncated conical portions have a star-shaped cross-section with rounded edges allowing, through a star-shaped conical surface, a fixation of the components that benefits the passivity of the system, reducing tensions in the fastening screw, thus preventing loosening. As perfect peripheral seal is obtained, airtightness increases, thus guarding against bacterial invasion.

3. An implant system as set forth in claim 1, **CHARACTERIZED in that** the implant cylindrical-conical portion has a trapezoidal cross-sectional thread.

4. An implant system as set forth in claim 1, **CHARACTERIZED in that** said shorter-length truncated conical portion extends as a cross-sectional cylindrical portion narrowing to the free end, the portion showing a lateral milled section.

5. An implant system as set forth in claim 1, **CHARACTERIZED in that** said shorter-length truncated conical portion extends as a couple of stepped portions, square and cylindrical, to end in a head having at least one sphere laterally disposed.

6. An implant system as set forth in claim 1, **CHARACTERIZED in that** said shorter-length truncated conical portion extends through annular shoulders as a truncated conical portion, both portions having a blind hole longitudinally with two stepped portions, the lower portion having a thread.
